# EUROPEAN PATENT APPLICATION

(11) **EP 4 292 879 A1**
(43) Date of publication of application: **20.12.2023**
(21) Application number: 22179242.7
(22) Date of filing: 15.06.2022
(51) Int. Cl.: B60N 3/00, B60K 35/00

(54) **TABLE ASSEMBLY FOR A TRUCK**

(71) Applicant: VOLVO TRUCK CORPORATION, 405 08 Göteborg (SE)
(72) Inventor: FOUET, Michel, 38890 SALAGNON (FR); MORFINO, Anna, 69003 LYON (FR)
(74) Representative: Plasseraud IP

(57) **Abstract**

The invention relates to a table assembly (1) for a truck (100), comprising a turntable (2) which comprises:
- a first side (3) comprising a bearing surface (4) configured for receiving equipment,
- a second side (5) opposed to the first side (3), the second side (5) comprising a display surface (6) of a screen (7),
wherein the turntable (2) is rotatable around a first rotation axis (D1) between a first position (P1) in which the turntable (2) can hold equipment and at least a second position (P2) in which the display surface (6) of the screen (7) is viewable by a truck user.

## Description

### Technical Field

This disclosure relates to a table assembly for equipping a vehicle, in particular a heavy-duty vehicle like a truck.

### Background Art

The cabin of a truck is generally equipped with a small adjustable table fixed to the dashboard. This table is used in particular when the truck is stopped, for activities not related to driving. The driver can for example take his/her meals, or do paperwork, or install pieces of equipment such as a laptop computer. The table can be oriented in different ways so that it can be used from different positions in the cabin, such as from the driver's seat, from one of the passenger seats, or from the bunk.

During rest periods, it is common for the driver to stay in the cabin of his truck and watch video sequences, for example on his mobile phone. The table can be used to install the phone in a position adequate for watching the screen, and install a charger to supply the battery of the device. The visual comfort of such an installation remains limited, mainly due to the small size of the screen.

There is therefore a need to have a recreational screen of increased size, which can be moved according to the installation position of the user.

### Summary

To this end, it is proposed a table assembly for a truck, comprising a turntable which comprises:
- a first side comprising a bearing surface configured for receiving equipment,
- a second side opposed to the first side, the second side comprising a display surface of a screen,
wherein the turntable is rotatable around a first rotation axis between a first position in which the turntable can support and/or hold equipment and at least a second position in which the display surface of the screen is viewable by a truck user.

The turntable can provide two different functions, depending on its selected orientation. When oriented by a user in the first position, a bearing surface is available as with a conventional table. When oriented in the second position, the back of the turntable becomes a display screen on which video content may be played. This display screen may have a size close to the size of the turntable, therefore providing a comfortable viewing surface. The integration of the screen into the cabin is neat and doesn't reduce the space available in the cabin.

The following features can be optionally implemented, separately or in combination one with the others:
The screen is a fixed part of the turntable.

The first rotation axis is a horizontal axis when the table assembly is in its nominal installation position in the truck.

The turntable is substantially horizontal when it is in the first position.

The turntable is substantially vertical when it is in the second position.

The turntable has a substantially parallelepipedal shape.

The bearing surface of the turntable is rectangular.

The bearing surface may comprise an anti-slip layer.

The thickness of the turntable is comprised between 25 millimeters and 45 millimeters.

The length of the turntable is comprised between 415 millimeters and 500 millimeters.

The width of the turntable is comprised between 300 millimeters and 400 millimeters.

In an embodiment of the table assembly, the first position of the turntable and the at least second position of the turntable are separated by a rotation angle comprised between 90° and 130°.

According to an embodiment of the table assembly, a surface area of the display surface of the screen is comprised between 75% and 95% of a surface area of the bearing surface.

Preferably, the screen is as large as the overall surface of the turntable. A comfortable viewing surface is thus available. The screen doesn't modify the overall length and width of the turntable.

In an embodiment, the first rotation axis is parallel to a main axis of the turntable.

In an embodiment of the table assembly, the first rotation axis is coaxial with the main axis of the turntable.

The rotation torque generated by the loads disposed on the bearing surface tend to balance each other when the loads are spread over the whole surface.

According to an example of implementation of the table assembly, the turntable comprises a shell defining a reception housing for the screen and a retaining ring configured to maintain the screen in the reception housing.

According to an embodiment of the table assembly, the turntable is pivotally mounted on a swing arm rotatable around a second rotation axis, the second rotation axis being transverse to the first axis.

The second rotation axis may be a vertical axis when the table assembly is in its nominal installation position in the truck.

The direction of the second rotation axis and the direction of the first rotation axis can make an angle comprised between 70° and 90°.

The turntable is configured to stay in the first position as long as a torque applied on the turntable is less than a first predetermined threshold.

The turntable is configured to stay in the second position as long as a torque applied on the turntable is less than a second predetermined threshold.

The swing arm comprises a tubular section in which the screen power supply wires are disposed.

In an embodiment, the table assembly comprises a display authorization means configured for determining an operational status and for selectively allowing or inhibiting the display of information on the screen in function of the determined operational status.

As the table assembly is intended to be used in a vehicle, a display authorization means checks that the conditions are safe before authorizing a display on the screen. Display is authorized only when the truck driver is not driving, and more particularly when the truck engine is turned off.

According to an embodiment of the table assembly, the second side of the turntable comprises a camera orientated in a direction substantially normal to the extension plane of the screen, and
the display surface of the screen is configured for displaying an image captured by the camera.

The screen can thus be used as a virtual mirror, the user standing in front of the camera being able to see his own image.

The camera can be integrated into the screen.

The camera can be a unit distinct from the screen.

The camera can be housed in the retaining ring.

In an embodiment, the table assembly comprises an input configured for receiving video signals to be displayed on the screen.

The input may be a memory card reader, such as a USB stick reader.

The input may be a wireless input, such as a Wi-Fi signal input or a Bluetooth signal input.

The table assembly can comprise a plurality of inputs configured for receiving video signals to be displayed on the screen.

In an embodiment, the turntable comprises a sealing gasket configured for sealing the screen from water and particles ingress.

The screen is surrounded by a sealing gasket configured for preventing ingress of water, or dust particles.

The turntable comprises a retaining wall surrounding the bearing surface.

The retaining wall may be continuous.

The height of the retaining wall is comprised between 15 millimeters and 30 millimeters.

The retaining wall may be an integral part of the shell.

In an embodiment of the table assembly, the turntable comprises a groove surrounding the screen.

When the turntable is in the first position, water droplets are collected in the groove and can't reach the surface of the screen. When the groove is full, additional water will drip onto the floor.

The groove forms a closed loop surrounding the screen.

The width of the groove is comprised between 2 millimeters and 6 millimeters.

The depth of the groove is comprised between 1.5 millimeters and 6 millimeters.

The cross section of the groove may be substantially rectangular.

The groove may be part of the retaining ring.

The turntable may comprise a loudspeaker configured for outputting an audio signal associated with the video content displayed on the screen.

The loudspeaker may be housed in a cavity of the retaining ring.

The invention also relates to a truck comprising a table assembly as described earlier and a dashboard, in which the table assembly is fixed to the dashboard of the truck.

In an embodiment, the display authorization means is configured for inhibiting the display of the screen when the truck is moving.

The display authorization means is configured for allowing the display of the screen when the truck is stationary.

In an embodiment, the display authorization means is configured for allowing the display of the screen only when a parking brake of the truck is activated.

The display authorization means may activate a switch to turn off the screen when the truck is moving.

The display authorization means may turn blank the display of the screen when the truck is moving.

### Brief Description of Drawings

Other features, details and advantages will be shown in the following detailed description and on the figures, on which:
- Fig. 1 is a general view of a is a general view of a truck on which a table assembly according to an embodiment on the invention is installed,
- Fig. 2 is a schematic side view illustrating the operation of a table assembly according to an embodiment,
- Fig. 3 is a perspective view of an embodiment of a table assembly, in a first position of the turntable,
- Fig. 4 is a perspective view of the table assembly of figure 3, in a second position of the turntable,
- Fig. 5 is a perspective view of a table assembly according to another embodiment,
- Fig. 6 is an exploded view of a turntable according to an embodiment of the table assembly,
- Fig. 7 is a schematic front view of a turntable according to another embodiment of the table assembly.

### Description of Embodiments

In order to make the figures easier to read, the different represented elements are not necessarily drawn to scale. On these figures, identical elements are described by identical reference numbers. Some elements or parameters may be indexed, which means referred to by first or second element, or by first or second parameter. This index system is used only for differentiating elements that are similar, but not identical. This index system does not imply a priority of one element, or parameter, over another one, and the different terms may be exchanged.

When a device or a subsystem comprises a given element, it doesn't exclude the presence of other elements in this device or subsystem.

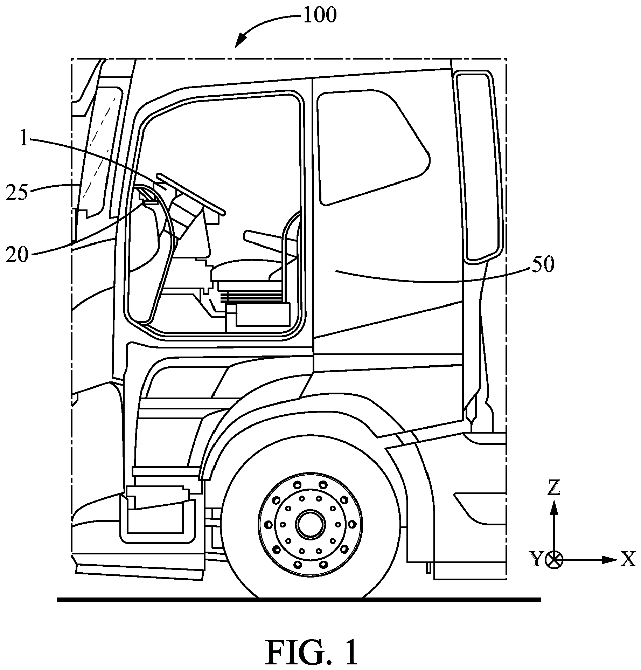

Figure 1 illustrates a truck 100 comprising a table assembly 1 that will be described below and a dashboard 20. The table assembly 1 is fixed to the dashboard 20 of the truck 100. The dashboard 20 stands behind the windscreen 25. The entry door has not been represented to show the inside of the cabin 50 of the truck. The truck is here a long-haul truck.

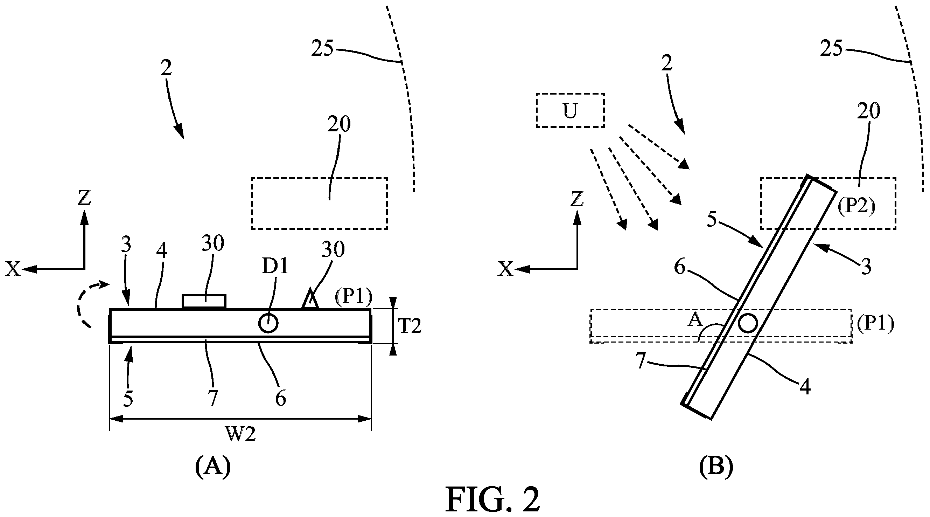

Figure 2 is a schematic side view of a table assembly 1 for the truck 100. The table assembly comprises a turntable 2 which comprises:
- a first side 3 comprising a bearing surface 4 configured for receiving equipment,
- a second side 5 opposed to the first side 3, the second side 5 comprising a display surface 6 of a screen 7,
wherein the turntable 2 is rotatable around a first rotation axis D1 between a first position P1 in which the turntable 2 can support and/or hold equipment and at least a second position P2 in which the display surface 6 of the screen 7 is viewable by a truck user.

The turntable 2 can provide two different functions, depending on the selected orientation. When oriented by a user in the first position P1, a bearing surface 4 is available, like a conventional table. Various pieces of equipment, indicated by signs 30, can be installed on the bearing surface 4, like food, beverage, lap top computer, book... When oriented in the second position P2, the back of the turntable 2 becomes a display screen 7 on which some video content may be played. This display screen 7 may occupy the whole surface of the turntable 2, which provides a spacious and comfortable viewing surface, especially compared to a mobile phone which is often used by the truck users for such video displays. The integration of the screen 7 into the cabin is neat and doesn't reduce the space available in the cabin, since the screen is completely integrated into the turntable 2. On figure 2, the sign U indicates the position of the user and the arrows the sight lines. On part A of figure 2, the turntable 2 is in the first position P1. On part B of figure 2, the turntable 2 is in the second position P2, and the initial position P1 is indicated with dotted line.

The turntable 2 is a plate-like element. The first side 3 is a front side of the turntable 2. The second side 5 is a back side of the turntable 2.

The screen 7 is a fixed part of the turntable 2. The screen 7 is fixed relatively to the other elements of the turntable 2. In other words, the screen 7 is a permanent part of the turntable 2 in normal operating conditions. The screen 7 can be separated from the other elements of the turntable only for replacement or if repairs need to be carried out.

The first rotation axis D1 is a horizontal axis when the table assembly 1 is in its nominal installation position in the truck 100.

The turntable 2 is substantially horizontal when it is in the first position P1. The turntable 2 is substantially vertical when it is in the second position P2.

The second position P2 can be selected between a range of different positions. The second position P2 is adjusted by the driver according to its situation in the cabin and according to its preferences. Some positions can be indexed. Alternatively, or additionally, there may be provided a friction brake to maintain any desired current angular position intermediate between the first position P1 and an extreme position in which the rotation of the turntable 2 is maximum.

The bearing surface 4 of the turntable 2 is rectangular. The bearing surface 4 may comprise an anti-slip layer. The pieces of equipment 30 installed on the bearing surface are held in place, particularly when the truck is not on a horizontal surface.

The turntable 2 has a substantially parallelepipedal shape. The turntable 2 illustrated on the drawings have an overall cuboid shape. The thickness T2 of the turntable 2 is comprised between 25 millimeters and 45 millimeters. The length L2 of the turntable 2 is comprised between 415 millimeters and 500 millimeters. The width W2 of the turntable 2 is comprised between 300 millimeters and 400 millimeters.

In the illustrated example, the first position P1 of the turntable 2 and the at least second position P2 of the turntable 2 are separated by a rotation angle A comprised between 90° and 130°.

A surface area of the display surface 6 of the screen 7 is comprised between 75% and 95% of a surface area of the bearing surface 4. Preferably, the screen 7 is as large as the overall surface of the turntable 2. A comfortable viewing surface is thus available. The screen doesn't modify the overall length and width of the turntable 2.

The first rotation axis D1 is parallel to a main axis of the turntable 2. The main axis is the axis passing through the barycenter of the turntable 2 and extending in a direction parallel to the longest sides of the turntable 2.

As the turntable 2 is here rectangular, it comprises two short edges and two long edges, and the first rotation axis D1 intersects the short edges of the turntable 2. In the illustrated embodiment of the table assembly 1, the first rotation axis D1 is coaxial with the main axis of the turntable. The first rotation axis D1 coincides with the main axis, thus intersections with small sides in their middle. The first rotation axis D1 is here a symmetry axis of the turntable 2.

The rotation torque generated by the loads 30 disposed on the bearing surface 4 tend to balance each other when the loads are spread over the whole surface. The maximum payload of the table assembly 1 is for example 30 kilograms.

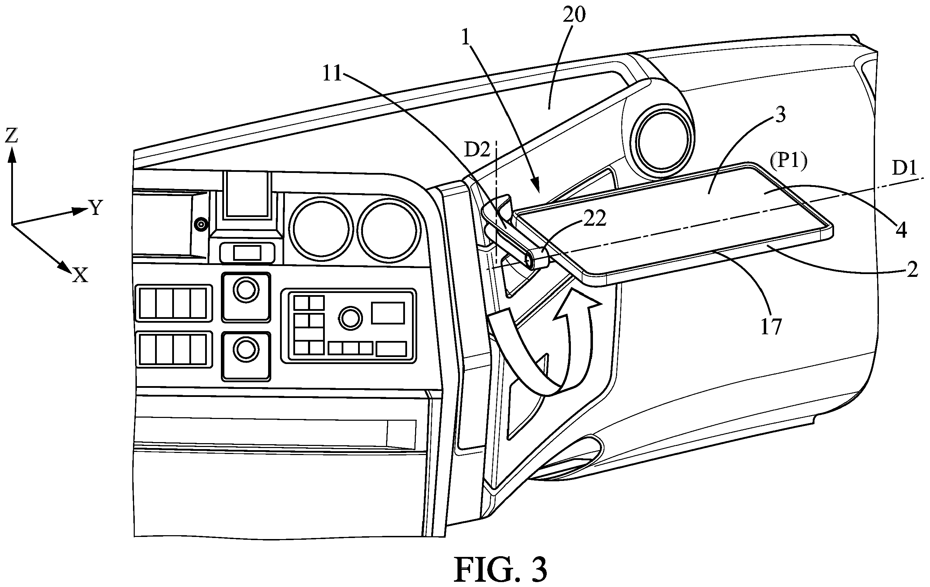

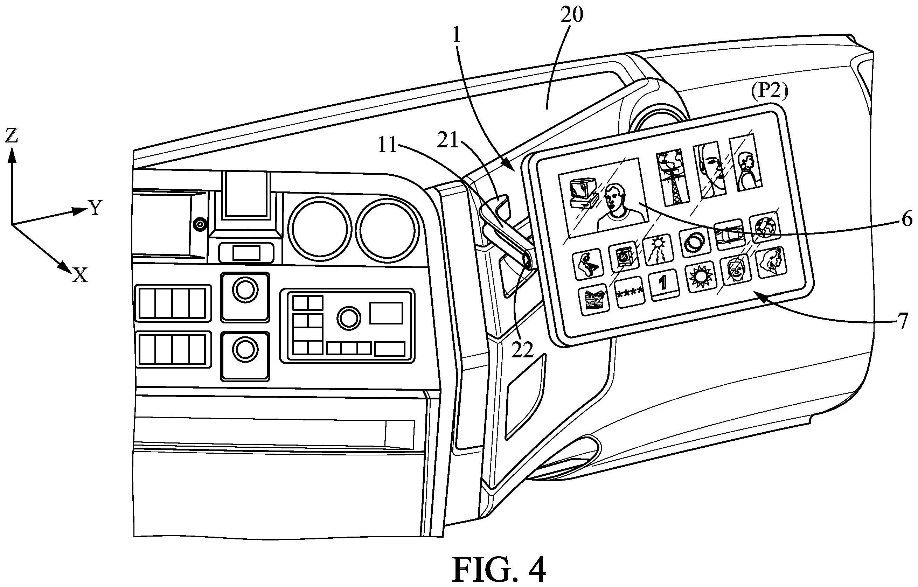

On figure 3, the turntable 2 is in the first position P1. In this position, the bearing surface 4 may receive pieces of equipment. The arrow indicates the possible rotation around the axis D1. On figure 4, the turntable 2 has been rotated and is now is the second position P2. The display surface 6 of the screen 7 is now visible from the driver, or from a passenger. The bearing surface 4 is not usable any more for receiving objects, since it stands close to vertical.

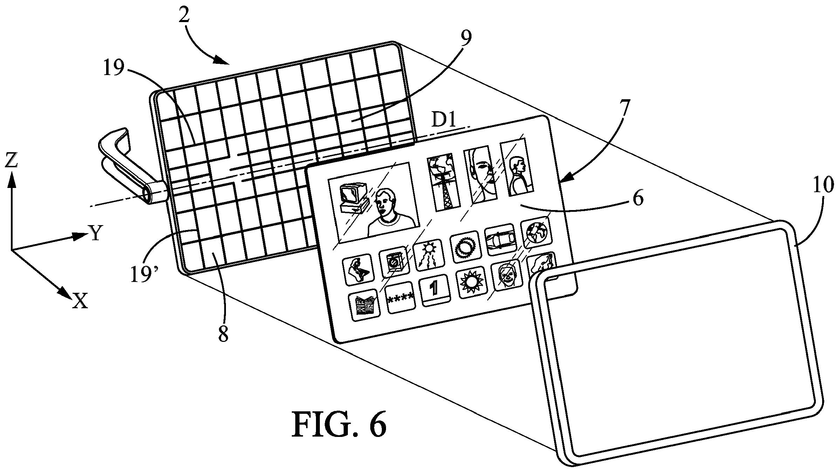

As illustrated on figure 6, the turntable 2 comprises a shell 8 defining a reception housing 9 for the screen 7 and a retaining ring 10 configured to maintain the screen 7 in the reception housing 9. On this figure, the different parts are represented separated from each other and the dotted lines indicate the direction of assembly.

The shell 8 comprises a first flat surface reinforced by a set of longitudinal ribs 19 and a set of transverse ribs 19'. The screen 7 sits on the reinforcements ribs 19, 19'. The most external ribs of the set of ribs 19,19' define the edges of the reception housing 9. The retaining ring 10 is stacked on the shell 8. The shell 8 and the retaining ring 9 are fixed together. Once the shell 8 and the retaining ring 10 are fixed together, the screen 7 is sandwiched between the shell 8 and the retaining ring 10.

The shell 8 is for example a plastic injected part. The retaining ring 10 is for example a plastic injected part. The retaining ring 10 may be secured to the shell 8 by a set of screws, or by retaining clips.

The turntable 2 preferably comprises a sealing gasket, not represented, configured for sealing the screen 7 from water and particles ingress.

The screen 7 is surrounded by a sealing gasket configured for preventing ingress of water or dust particles. The sealing gasket may be received in a slot of the retaining ring 10, and is compressed when the retaining ring 10 is fixed to the shell 8.

A thermal insulator, not represented, can be disposed between the shell 8 and the screen 7 so that the heat of potentially hot objects disposed on the bearing surface 4 is not transmitted to the screen 7. Alternatively, the height of the ribs 19, 19' may be selected so that an air layer of sufficient thickness is present between the back of the bearing surface 4 and the screen 7.

In the illustrated example of the table assembly 1, the turntable 2 is pivotally mounted on a swing arm 11 rotatable around a second rotation axis D2, the second rotation axis D2 being transverse to the first axis D1.The turntable 2 can therefore be oriented according to two different directions, to be better adapted to the different use cases.

The swing arm 11 is rotatable relatively to the dashboard 20 of the truck 100. The dashboard 20 comprises a base plate in which a pivot of the swing arm 11 engages. The base plate is fixed to an internal structural member of the dashboard. The internal structural member provides the resistance required to resist to static and dynamic efforts with the maximum payload the table assembly is designed for. The base plate and the pivot are not visible on the figures.

The swing arm 11 is rod-shaped. The swing arm 11 is preferably metallic. The swing 11 arm is for example an aluminum casting. The swing arm 11 can also be a plastic injected part, preferably fiber reinforced.

The swing arm 11 comprises a tubular section in which the screen power supply wires are disposed. The wires have not been represented on the figures.

A first end 21 of the swing arm 11 is configured for being pivotally linked with the dashboard 20 of the truck. A second end 22 of the swing arm 11 is pivotally linked with the turntable 2. For this, a pivot of the turntable 2 may engage into a cylindrical housing of the swing arm 11.

The second rotation axis D2 may be a vertical axis Z when the table assembly 1 is in its nominal installation position in the truck 100. The direction of the second rotation axis D2 and the direction of the first rotation axis D1 can make an angle comprised between 70° and 90°.

The turntable 2 is configured to stay in the first position P1 as long as a torque applied on the turntable 2 is less than a first predetermined threshold. The turntable 2 is configured to stay in the second position P2 as long as a torque applied on the turntable 2 is less than a second predetermined threshold.

In an embodiment, the table assembly 1 comprises a display authorization means 15 configured for determining an operational status and for selectively allowing or inhibiting the display of information on the screen 7 in function of the determined operational status.

As the table assembly is intended to be used in a vehicle, a display authorization means 15 checks that the conditions are safe before authorizing a display on the screen 7. Display is authorized only when the truck driver is not driving.

In an embodiment, the display authorization means 15 is configured for inhibiting the display of the screen 7 when the truck 100 is moving. The display authorization means 15 is configured for allowing the display of the screen 7 when the truck 100 is stationary. Therefore, the driver can't be distracted by the images displayed on the screen while he's driving, even if this display was first selected by a passenger.

For example, the display authorization means 15 is configured for allowing the display of the screen 7 only when a parking brake of the truck 100 is activated.

The display authorization means 15 may activate a switch to turn off the screen 7 when the truck 100 is moving. Alternatively, the display authorization means 11 may turn blank the display of the screen 7 when the truck 100 is moving.

The display authorization means 15 may be a subsystem different from the table assembly 1. The display authorization means 15 may be a body controller that receives inputs like for example wheel speed, engine speed, parking brake position or status. The display authorization means 15 may comprise an electronic controller exchanging data with other controllers via a multiplexed network.

. The table assembly 1 may also comprise an engine start inhibition module. The engine start inhibition module prevents the start of the engine if the turntable 2 is orientated in a position corresponding to the second position P2 of the screen 7, or is orientated in a position too distant from the first position P1. For example, the engine start is prevented if the turntable 2 is turned by more than 20° relatively to the first position P1. For this, the swing arm 11 may comprise a contact switch configured for detecting an orientation position of the turntable 2. The contact switch provides a signal to the start inhibition module, which in turn provides a signal to the engine management system and prevents engine cranking. Therefore, the truck can be driven only if the turntable is not in a viewing position of the screen 7.

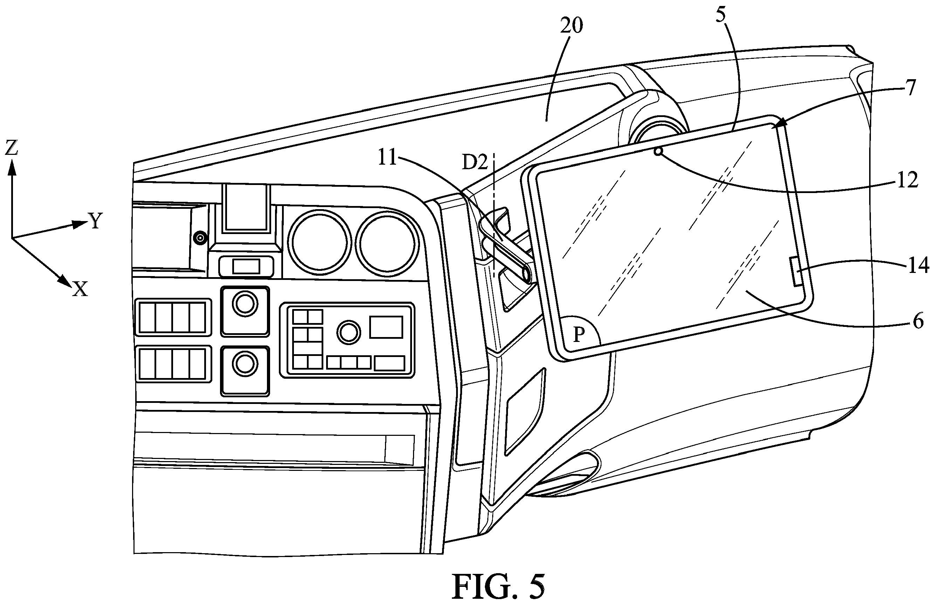

In an embodiment of the table assembly 1, illustrated on figure 5, the second side 5 of the turntable 2 comprises a camera 12 orientated in a direction substantially normal to the extension plane P of the screen 7. The display surface 6 of the screen 7 is configured for displaying an image captured by the camera 12.

The screen 7 can thus be used as a virtual mirror. The user stands in front of the camera 12, and can directly see his own image on the display surface 6 of the screen 7.

The camera 12 can be integrated into the screen 7.

The camera 12 can also be a module distinct from the screen 7. The camera 12 can be housed in the retaining ring 10.

The table assembly 1 comprises an input 14 configured for receiving video signals to be displayed on the screen 7.

The input 14 may be a memory card reader, such as a USB stick reader. The input 14 may be a wireless input, such as a Wi-Fi signal input or a Bluetooth signal input.

Preferably, the table assembly 1 comprises a plurality of inputs 14 configured for receiving video signals to be displayed on the screen.

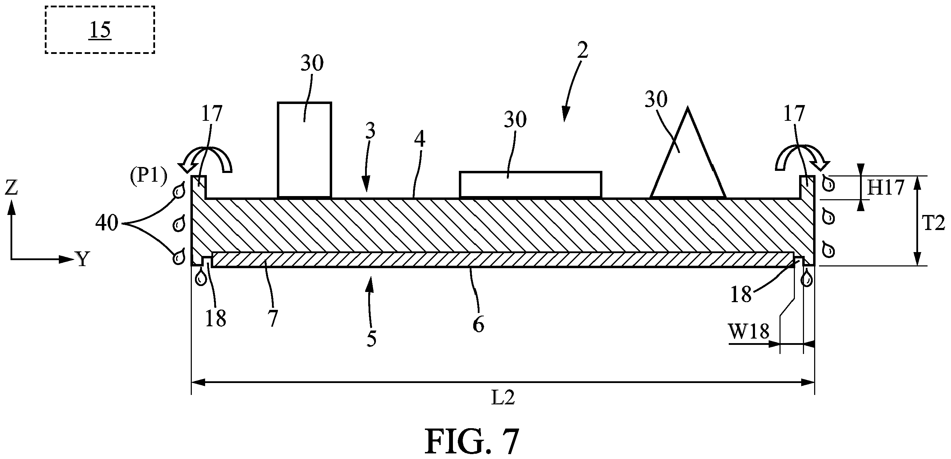

In an embodiment illustrated particularly on figure 7, the turntable 2 comprises a retaining wall 17 surrounding the bearing surface 4. The retaining wall 17 protrudes from the bearing surface 4 and stops the objects 30 disposed on the bearing surface 4 from falling over the edge of the bearing surface 4.

The retaining wall 17 may define the external edge of the turntable 2. The retaining wall 17 may be continuous. The retaining wall 17 may for example be an integral part of the shell 8. For example, the wall 17 may be molded together with the ribs of the shell 8.

The height H17 of the retaining wall 17 is comprised between 10 millimeters and 25 millimeters.

On the embodiment of the table assembly 1 illustrated on figure 7, the turntable 2 comprises a groove 18 surrounding the screen 7.

When the turntable 2 is in the first position P1, as represented on figure 7, water droplets 40 are collected in the groove 18 and can't reach the surface of the screen 7. When the groove 18 is full, additional water droplets will drip onto the floor without wetting the screen surface 6. The risk of water ingress into the electronic circuits of the screen is eliminated. Water droplets may come from spillage of liquid on the bearing surface 4, or from accumulated condensation due to temperature differences between daytime and night time, particularly when the cabin is not heated.

The groove 18 forms a closed loop surrounding the screen 7. The groove 18 is continuous and forms a water collection trench. The groove 18 may be part of the retaining ring 10.

The width W18 of the groove 18 is comprised between 2 millimeters and 6 millimeters. The depth of the groove 18 is comprised between 1.5 millimeters and 6 millimeters. The cross section of the groove 18 may be substantially rectangular.

The turntable 2 may also comprise a loudspeaker configured for outputting an audio signal associated with the video content displayed on the screen 7.

The loudspeaker may be housed in a cavity of the retaining ring 10. The loudspeaker is in that case of separated part from the screen 7. Compared to speakers integrated in screens, a sound of better quality can be played with a bespoke loudspeaker. The loudspeaker has not been represented on the figures.

## Claims

1. A table assembly (1) for a truck (100), comprising a turntable (2) which comprises:
- a first side (3) comprising a bearing surface (4) configured for receiving equipment,
- a second side (5) opposed to the first side (3), the second side (5) comprising a display surface (6) of a screen (7),
wherein the turntable (2) is rotatable around a first rotation axis (D1) between a first position (P1) in which the turntable (2) can hold equipment and at least a second position (P2) in which the display surface (6) of the screen (7) is viewable by a truck user.

2. A table assembly (1) according to claim 1, in which the first position (P1) of the turntable (2) and the at least second position (P2) of the turntable (2) are separated by a rotation angle (A) comprised between 90° and 130°.

3. A table assembly (1) according to claim 1 or 2, in which a surface area of the display surface (6) of the screen (7) is comprised between 75% and 95% of a surface area of the bearing surface (4).

4. A table assembly (1) according to any of the preceding claims, in which the first rotation axis (D1) is parallel to a main axis of the turntable (2).

5. A table assembly (1) according to any of the preceding claims, in which the first rotation axis (D1) is coaxial with the main axis of the turntable.

6. A table assembly (1) according to any of the preceding claims, in which the turntable (2) comprises a shell (8) defining a reception housing (9) for the screen (7) and a retaining ring (10) configured to maintain the screen (7) in the reception housing (9).

7. A table assembly (1) according to any of the preceding claims, in which the turntable (2) is pivotally mounted on a swing arm (11) rotatable around a second rotation axis (D2), the second rotation axis (D2) being transverse to the first axis (D1).

8. A table assembly (1) according to any of the preceding claims, comprising a display authorization means (15) configured for determining an operational status and for selectively allowing or inhibiting the display of information on the screen (7) in function of the determined operational status.

9. A table assembly (1) according to any of the preceding claims, in which the second side (5) of the turntable (2) comprises a camera (12) orientated in a direction substantially normal to the extension plane (P) of the screen (7), and in which the display surface (6) of the screen (7) is configured for displaying an image captured by the camera (12).

10. A table assembly (1) according to any of the preceding claims, comprising an input (14) configured for receiving video signals to be displayed on the screen.

11. A table assembly (1) according to any of the preceding claims, in which the turntable (2) comprises a sealing gasket (16) configured for sealing the screen (7) from water and particles ingress.

12. A table assembly (1) according to any of the preceding claims, in which the turntable (2) comprises a groove (18) surrounding the screen (7).

13. A truck (100) comprising a table assembly (1) according to any of the preceding claims and a dashboard (20), in which the table assembly (1) is fixed to the dashboard (20) of the truck.

14. A truck according to the preceding claim in combination with claim 8, in which the display authorization means (11) is configured for inhibiting the display of the screen (7) when the truck (100) is moving.

15. A truck according to the preceding claim, in which the display authorization means (11) is configured for allowing the display of the screen (7) only when a parking brake of the truck (100) is activated.
